# EUROPEAN PATENT APPLICATION

(11) **EP 3 001 552 A1**
(43) Date of publication of application: **30.03.2016**
(21) Application number: 14185999.1
(22) Date of filing: 23.09.2014
(51) Int. Cl.: H02M 1/32, H02M 7/483, H02J 3/36

(54) **Voltage source converter and control thereof**

(71) Applicant: ALSTOM Technology Ltd, 5400 Baden (CH)
(72) Inventor: WHITEHOUSE, Robert, Stafford ST17OJU (GB); TRAINER, David, Derby DE24 OAQ, (GB); DAVIDSON, Colin Charnock, Stafford ST17 4PS (GB)
(74) Representative: Davies, Philip

(57) **Abstract**

This application relates to voltage source converters and method of controlling such converters in a DC fault situation. The converter (200; 500) has a plurality of AC terminals (a, b, c) and first and second DC terminals (DC+, DC-) with each AC terminal being connected to the first and second DC terminals via respective first and second converter arms. The converter also comprises a fault controller (205) and a DC breaker (206) connected in series with the first DC terminal. The fault controller is configured to, in the event of a DC fault being detected: control the converter to provide current paths for current flow between the AC terminals that bypass the DC system connected to the DC terminals and also to operate the DC breaker (206). Each converter arm may comprise at least one bypass module (202; 502), which may have switching elements (203, 204) such as thyristors to establish current paths in both directions through the converter arm in a fault situation. Providing such current paths effectively short circuits the AC system and allows the DC breaker (206) to have a lower voltage rating than otherwise would be required. The DC breaker may comprise a low voltage electronic switch (207) in series with a mechanical isolation switch (208)

## Description

This application relates to a voltage source converter and to methods and apparatus for control of a voltage source converter for DC fault blocking, and especially to a voltage source converter for use in high voltage power distribution and in particular to a voltage source converter with a high speed and/or low loss DC fault current blocking capability.

HVDC (high-voltage direct current) electrical power transmission uses direct current for the transmission of electrical power. This is an alternative to alternating current electrical power transmission which is more common. There are a number of benefits to using HVDC electrical power transmission.

In order to use HVDC electrical power transmission, it is typically necessary to convert alternating current (AC) to direct current (DC) and back again. Historically this has involved a six pulse bridge type topology based on thyristors which is sometimes known as a line-commutated converter (LCC). Recent developments in the power electronics field have led to an increased use of voltages-source converters (VSC) for AC-DC and DC-AC conversion. VSCs typically comprise multiple converter arms, each of which connects one DC terminal to one AC terminal. For a typical three phase AC input/output there are six converter arms, with the two arms connecting a given AC terminal to the high and low DC terminals respectively forming a phase limb. Each arm comprises an apparatus which is termed a valve and which typically comprises a plurality of modules which may be switched in a desired sequence.

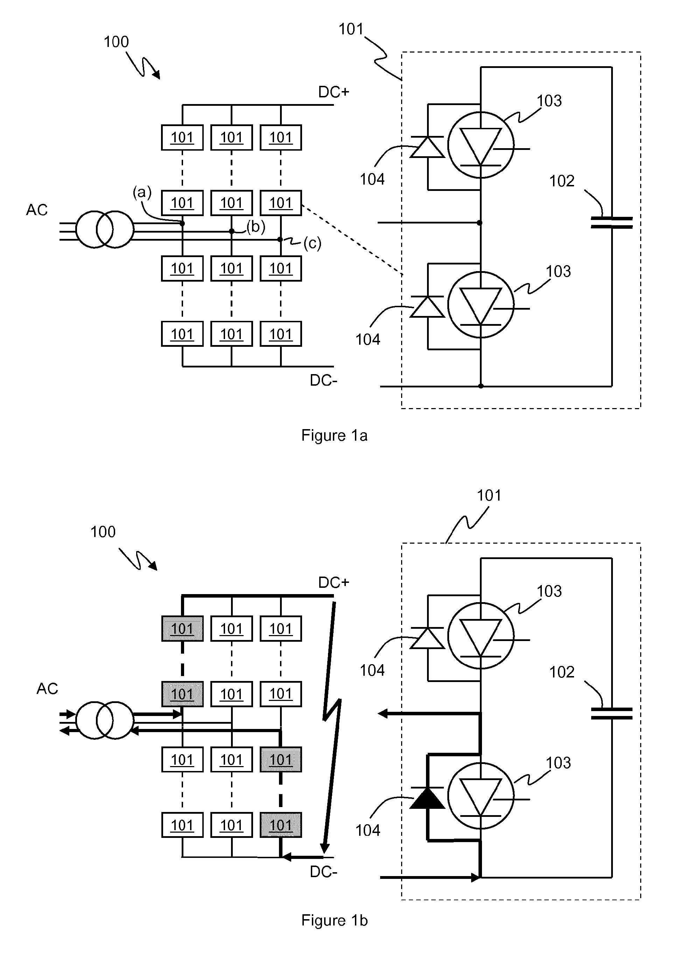

Figure 1a illustrates one known type of VSC 100, referred to a modular multilevel converter (MMC). In an MMC each converter arm comprises a series of cells 101 connected in series between the relevant AC terminal (a, b, c) and the relevant DC terminal (DC+ or DC-). Each cell comprises an energy storage element 102, such as a capacitor, and a switch arrangement that can be controlled so as to either connect the energy storage element in series between the terminals of the cell or bypass the energy storage element. The switch arrangement comprises cell switches 103 such as insulated gate bipolar transistors (IGBTs), each with an anti-parallel diode 104. The cells may be referred to a power modules, although the individual cells are often referred to as sub-modules with a plurality of cells forming a valve module. The sub-modules of a converter arm are controlled to connect or bypass their respective energy storage element at different times so as to vary over the time the voltage difference across the converter arm. By using a relatively large number of sub-modules and timing the switching appropriately the converter arm or valve can synthesise a stepped waveform that approximates to a sine wave and which contain low level of harmonic distortion.

Figure 1a illustrates an MMC where the cells 101 have switches arranged in a half-bridge arrangement. In such a VSC a short circuit across the DC terminals will allow a fault current to flow between the phase arms and thus between the various AC phases. Figure 1b illustrates how a fault current can flow between the AC phases with a DC short circuit. It will of course be appreciated that figure 1b illustrates the fault current at just one instant and the flow path will change as the AC voltages vary. As illustrated this fault current flows in the diodes of the cells 101 of the VSC and therefore is uncontrolled. The magnitude of such a fault current is only limited by the system AC impedance, and the converter transformer and valve reactances and could therefore potentially reach a magnitude which would damage the components of the VSC. Further such a fault current would cause considerable disruption to the operation of both the AC and DC systems. It is therefore desirable to stop the flow of such a fault current in the event of a fault and disconnect the converter from the fault.

It will be appreciated that an MMC with cells arranged in a half-bridge switch arrangement is just one example of VSC where a current path through the diodes of a valve may be established in the event of a DC fault and such other types of VSC may suffer similar problems.

Various approaches to address this problem have been proposed. For example an AC breaker on the AC side could be operated in the event of a fault. However typical AC breakers require a relatively substantial time, e.g. more than 40ms, to open and thus stop the fault current. In the event of a fault the VSC may be subjected to excessive current flow before the breaker operates. In addition the AC system itself is subjected to the fault current with resulting effect on other consumers. An additional problem with the use of the AC breaker is that the re-closure time is significantly longer than the opening time and therefore restarting power transmission following a fault can require a relatively long process which is not desirable.

Alternatively a DC side breaker could be implemented and operated in the event of a fault. It will be appreciated by one skilled in the art that as a DC fault current may be continuous, conventional mechanical contact breakers cannot be used to stop the fault current as arcing will occur as the contacts start to separate. DC breakers made from electronic devices (e.g. IGBT switches) have been proposed (see, for example, EP0867998B1 or US2011/0235375). The electronic devices are in the ON state in normal operation and are turned OFF in the event of a fault. Such electronic DC breakers are extremely quick and thus provide rapid blocking of a DC fault current. However in high voltage applications a large number of switching devices, e.g. of the order of hundreds, need to be connected in series to implement a practical DC breaker. As the electronic devices result in a steady state voltage drop in the ON state they constitute a significant energy loss for the DC system, which is undesirable.

Hybrid DC breakers for high voltage, high current applications using mechanical high speed switches and parallel semiconductor bypass paths, such as described in WO13071980 A1, have been proposed. Hybrid breakers comprise a main current path that is low loss and an auxiliary path comprising a fully rated electronic DC breaker such as described above. In normal operation the current flows via the main current path, which is low loss. In the event of a fault the current flow is forced to the auxiliary path, with the electronics devices in the auxiliary path being in the ON state. This allows a mechanical isolator in the main path to operate. Once the mechanical isolator has operated the electronic devices in the auxiliary path can be turned off. Such hybrid DC breakers offer low loss in use but are not yet readily available and in any case may be relatively large and relatively expensive components that may not be suitable for some applications.

The use of a full-bridge switching arrangement for the cells of the VSC, or other similar topologies, enables the full-bridge modules to be switched to rapidly block a fault current in the DC system. However they are more complex and have more power components with increased energy dissipation than the half bridge module and therefore may not be suitable for some applications.

Embodiments of the present invention therefore provide methods and apparatus for DC fault handling for VSCs that at least mitigate at least some of the above mentioned disadvantages.

Thus according to the present invention there is provided a voltage source converter apparatus comprising:
a plurality of AC terminals and first and second DC terminals;
each AC terminal being connected to the first DC terminal via a respective first converter arm and to the second DC terminal via a respective second converter arm;
a DC breaker connected in series with at least one of the first and second DC terminals; and
a fault controller, wherein said fault controller is configured to, in the event of a DC fault being detected: control the converter apparatus to provide current paths for current flow between the AC terminals that bypass a DC system connected to the first and second DC terminals; and operate the DC breaker.

The voltage source converter (VSC) apparatus according to the present invention thus includes a DC breaker connected to at least one of the DC terminals, i.e. a DC terminal which is common to the various phase limbs. In addition to the DC breaker however the VSC is operable to provide current paths for current flow between the AC terminals when a DC fault is detected where such current flow is not via a DC system connected to the converter apparatus, i.e. the current paths bypass the connected DC system. As will be described in more detail later this provides current paths between the various phases for circulation of the AC current. In effect the AC system is short-circuited. This means that, in a fault situation, most of the current in the VSC is bypassed away from the DC system. As will be explained in more detail below this allows the use of a lower rated DC breaker than otherwise be required. A lower rated DC breaker will comprise fewer component and provided lower losses.

In some embodiments the converter apparatus may be controlled to provide paths for current flow in both directions through each converter arm. This means that current can flow in one direction through one of the first converter arms (from one of the AC terminals towards the first DC terminal say) and, at least partly, circulated to flow in the opposite direction through a different first converter arm to a different AC terminal.

Whilst in some applications it may be possible to use the components of a converter arm that are present for normal operation of the VSC to establish current paths between the AC terminals that bypass the DC system, e.g. current paths in both directions through the converter arm, in many practical applications the fault current that would be experienced may lead to damage of such components. In some embodiments therefore each of the first and second converter arms may comprise at least one bypass module for establishing at least one of the bypass current paths in a fault condition. In other words there may be additional components that are provided for use in a fault mode to establish at least one of the current paths. The (or each) bypass module may comprise at least one controlled bypass switching element.

In some embodiments the bypass module(s) may establish current paths for current flow in both directions through a converter arm, i.e. such that the majority or substantially all of the current flowing in a converter arm in a fault situation flows via the bypass module(s). Each bypass module may therefore comprise at least one controlled bypass switching element for allowing current flow in one direction in parallel with at least one controlled bypass switching element for allowing current flow in the opposite direction.

The controlled bypass switching elements may comprise thyristors, although other switching elements may be used in some applications.

In some embodiments at least one of said controlled bypass switching elements is connected in series with a current limiting element. The provision of a current limiting element in the bypass module(s) can limit the fault current flowing in a fault condition and/or ensure a current zero.

In some embodiments each converter arm may comprise a plurality of cells connected in series and each cell may comprise one of the bypass modules connected between the terminals of the cell. For example the VSC may be a modular multilevel converter (MMC) with a plurality of cells, sometimes referred to as sub-modules or power modules. Each cell may comprise at least one energy storage element such as a capacitor connected with the cell switching elements, such as IGBTs. The switching elements may be connected in a half-bridge arrangement as would be understood by one skilled in the art.

In some embodiments each converter arm comprises at least one bypass module connected in parallel with a converter arm apparatus, the converter arm apparatus being for operation of the converter in a non-fault mode of operation. In other words a converter arm may comprise a first branch comprising a converter arm apparatus, often referred to as a valve, for controlled switching between the relevant AC and DC terminals in normal operation of the converter. For an MMC this converter arm apparatus may comprise a plurality of series connected cells as discussed above. The converter arm also comprises a second branch, in parallel with the first branch, which comprises the bypass module and which is used in a fault mode of operation. In such embodiments the bypass module may comprise a first plurality of bypass switching elements in series establishing a path for current flow in one direction and a second plurality of bypass switching elements in series establishing a path for current flow in the opposite direction.

In some embodiments at least one bypass module may be provided between the first and second DC terminals, i.e. connected in series between the DC terminals. In other words each converter arm may be operated to provide a current path between the relevant AC and DC terminals for that converter arm and the at least one bypass module is operated, in a fault condition, to provide a current path between the DC terminals. The current path provided by the bypass module(s) in such an embodiment allows current to be circulated from an AC terminal to the first DC terminal via a first converter arm and then to the second DC terminal via the bypass modules(s) and to a different AC terminal via a second converter arm, all without flowing via the DC system. In such embodiments the bypass module may comprise a plurality of bypass switching elements in series establishing a path for current flow. In such an embodiment the converter arm apparatus may be used to establish the current path through the converter arm in a fault condition if the components of the converter arm apparatus are robust enough to handle the fault current. In other embodiments at least one bypass module may be associated with each converter arm as described above, but such converter arm bypass modules may only provide bypass current paths for current flow in one direction, with the bypass module between the DC terminals providing the path for current flow in the opposite direction.

As mentioned above the operation of the VSC to provide current paths for current flow between the AC terminals that avoid the DC system allows use of a lower rated DC breaker than otherwise would be the case. The DC breaker may have a voltage rating which is lower, and in some embodiments significantly lower, than the nominal DC voltage of the voltage source converter. As will be described in more detail later the overall voltage rating required for the DC breaker is determined by the residual DC voltage across the converter whilst the fault current is flowing in the current paths established by the fault controller, e.g. through the bypass modules and also by the desired time required to extinguish the pre-established current flowing in the DC circuit. For example with a 640kV_{dc} (±320kV_{dc}) VSC converter the DC breaker may be chosen to be rated at less than 64kV_{dc}. In some embodiments the DC breaker may have a voltage rating which is no greater than a quarter of the nominal DC voltage of the voltage source converter. In some embodiments the voltage rating of the DC breaker may be no greater than a third of the nominal voltage of the VSC or no greater than a quarter of the nominal voltage of the VSC. In some embodiments the voltage rating of the DC breaker may be no greater than a tenth of the nominal DC voltage of the VSC. For example the DC breaker may have a voltage rating which is no greater than 200kV, or no greater than 150kV or no greater than 100kV.

It will be understood by one skilled in the art that the voltage rating of the DC breaker refers to the maximum safe voltage that may be developed across the DC breaker in use. One skilled in the art would be well are how to determine the voltage rating of a DC breaker. The nominal voltage of the VSC refers to the expected DC operating voltage as would be well understood by one skilled in the art. A conventional DC breaker would have a voltage rating at least as high as the nominal voltage of the VSC.

The voltage rating of the DC breaker is related to its voltage blocking capability and thus its ability to block a DC current.

It should be noted that the DC breaker of embodiments of the present invention is not simply a module of a higher rated DC breaker or part of a hybrid breaker connected to the same DC terminal. The DC breaker is sufficient, on its own (once the bypass current paths have been established), to block any DC current flowing and to isolate the VSC from the DC system to which it is connected in normal operation.

The DC breaker may itself comprise a first breaker module connected in series with the first DC terminal and a second breaker module connected in series with the second DC terminal. Thus there may be a first breaker module in series between the first DC terminal and the DC system and a second breaker module in series between the second DC terminal and the DC system. One skilled in the art will appreciate that a DC breaker may typically be implemented by two DC breaker modules, one breaker module for each DC terminal/line. Each breaker module is capable of isolating the relevant DC terminal from the connected DC system and is sufficient, on its own, to block any DC current flowing to or from the relevant DC terminal (once the bypass current paths between the AC terminals have been established). The two DC breaker modules may be physically distinct and separated from one other but would be understood by one skilled in the art to be part of an overall DC breaker for the VSC. The voltage rating of the DC breaker discussed above refers to the overall rating of whole DC breaker, including both the first and second modules. Each DC breaker module may therefore be rated for a voltage lower than the magnitude of the nominal voltage for that DC terminal.

The DC breaker, e.g. each breaker module, may comprise an electronic switch in series with a mechanical switch. The electronic switch may comprise a plurality of breaker semiconductor switches connected in series and at least one energy absorbing element configured to form an energy absorbing path in parallel with a path through said plurality of breaker semiconductor switches.

As previous mentioned the voltage rating of the DC breaker is lower, and preferably substantially lower, than the nominal voltage of the VSC. The voltage rating of the electronic switch is thus correspondingly also lower than the nominal voltage of the VSC and the voltage ratings referred to above apply to the electronic switch. This means that the electronic switch of the DC breaker may comprise a relatively small number of semiconductor switches. For instance the electronic switch may comprises no more than 100 semiconductor switches, or no more than 75 semiconductor switches or no more than 50 semiconductor switches.

In some embodiments there is an energy absorbing element, such as a surge arrestor, in parallel with each breaker semiconductor switch.

It should be appreciated that the electronic switch is located in a main current flow path for the VSC in normal operation, i.e. in normal operation of the VSC the DC current flows through the plurality of breaker semiconductor switches and that it is operation of the breaker semiconductor switches that provides blocking of substantially all the DC current flowing (once the currents paths through the converter arms have been established). Thus unlike a hybrid DC breaker there is no need for an auxiliary switching path.

The mechanical switch may be any suitable mechanical isolation switch and may for instance be formed from a conventional isolation breaker as may be used in AC power networks.

The DC breaker comprises electronic switches can therefore operate relatively quickly to transfer the fault current into the energy absorbing branch and thus extinguish the DC fault. Once the DC current has been brought to substantially zero the mechanical isolation switch can then be opened. Once the mechanical isolation switch is opened the faulted DC system is isolated from the converter and the converter can then switch off the devices which created the short circuit to the ac system. The time required from detection to clearing of the fault is determined by the time required to bring the DC current to zero and the speed of operation of the mechanical isolator. In some embodiments the DC breaker and fault controller may be configured such that, on detection of a DC fault the fault controller is operable to extinguish the DC fault current in no more than 50ms. In some embodiments the DC breaker and fault controller may be configured such that, on detection of a DC fault the fault controller is operable to extinguish the DC fault current in no more than 20ms or no more than 5ms.

As mentioned the VSC may be an MMC type VSC. The MMC may comprise cells arranged in a half-bridge configuration. The principles of the invention can however be applied to other types of VSC.

The VSC may be adapted for use in high voltage DC power distribution. The VSC may form at least part of a power transmission or distribution station. Embodiment of the invention also relate to a high voltage direct current power distribution system comprising a voltage source converter as described.

In another aspect there is provided a method of fault current limiting in a voltage source converter having a plurality of AC terminals and first and second DC terminals; each AC terminal being connected to the first DC terminal via a respective first converter arm and to the second DC terminal; via a respective second converter arm; the method comprising: in the event of a DC fault being detected, controlling the converter to provide current paths for current flow between the AC terminals that bypass a DC system connected to the first and second DC terminals; and operating a DC breaker connected in series with at least one of the first and second DC terminals.

The method offers all of the advantages and can be implemented in all of the variants described above in respect to the first aspect of the invention. Teaching provided in relation to one aspect of the invention may be applied to the other aspect of the invention.

The invention will now be described by way of example only with reference to the accompanying drawings of which:
Figure 1a illustrates a conventional MMC type voltage source converter and figure 1b illustrates how a DC fault current may flow between the AC phases in such a converter;
Figure 2 illustrates a voltage source converter according to an embodiment of the invention;
Figure 3 illustrates how bypass modules may be controlled in the event of a DC fault to circulate the current in the converter;
Figure 4 illustrates one example of a low voltage switch suitable for use in an embodiment of the invention;
Figure 5a illustrates a voltage source converter according to another embodiment of the invention;
Figure 5b illustrates a voltage source converter according to a further embodiment of the invention;
Figure 6 illustrates a cell of a VSC having a bypass module according to another embodiment of the invention;
Figure 7 illustrates simulated waveforms for a VSC in the event of a DC fault with no fault protection;
Figure 8 simulated waveforms for a VSC in the event of a DC fault with fault protection according to an embodiment of the invention; and
Figure 9 simulated waveforms for a VSC in the event of a DC fault with fault protection according to an embodiment of the invention, with a faster fault clearing time to the example of figure 8.

Embodiments of the present invention relate to voltage source converters (VSCs) having a DC breaker connected in series with at least one of the DC terminals wherein, in the event of a DC fault, the VSC is operable to provide current paths between the AC terminals of the converter that bypass any DC system connected (via the DC breaker) to the DC terminals. This effectively short circuits the AC system and thus bypasses most of the converter current away from the DC system. The VSC can be controlled by a fault controller to provide the bypass current paths. In some embodiments the fault controller controls the VSC to provide current paths in both directions between each AC terminal and each DC terminal of the converter, i.e. in each direction through a converter arm. Establishing the bypass paths means that a reduced amount of DC current flows in the fault situation than would otherwise be the case and allows use of a lower rated DC breaker to isolate the VSC from the DC system. This means that the DC breaker may comprises fewer components than a conventional high voltage DC breaker which reduces the cost and size of the breaker and means that its losses in normal operation are significantly reduced.

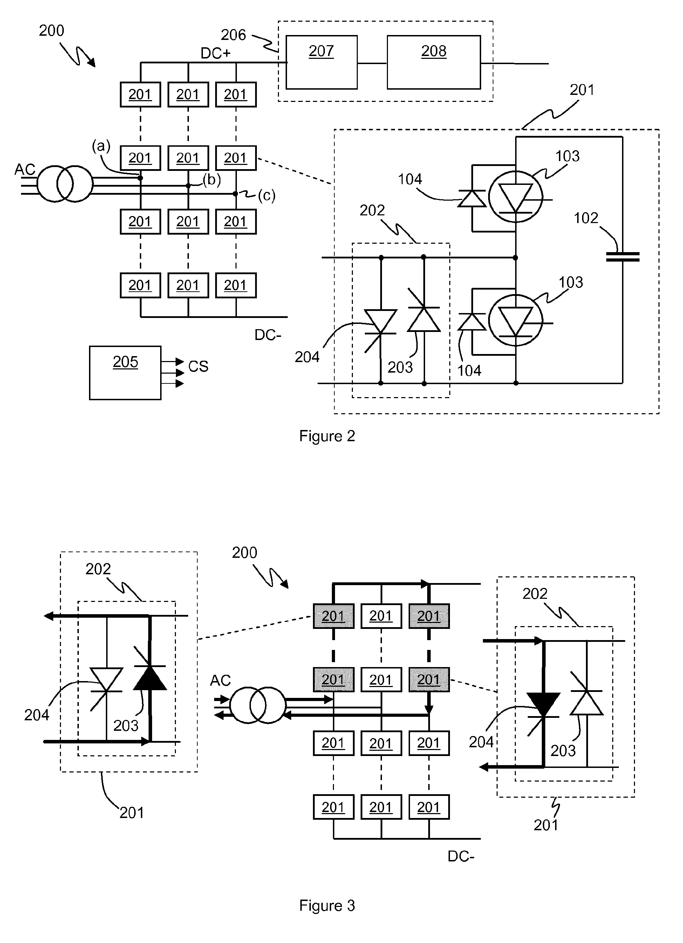

Figure 2 illustrates a voltage source converter (VSC) 200 according to an embodiment of the invention. The VSC 200 has a plurality of converter arms, each converter arm connecting an AC terminal (a, b, c) to a respective DC terminal (DC+, DC-). In this embodiment each converter arm comprises a plurality of cells 201, also sometimes referred to as sub-modules, each of which comprises at least one energy storage element 102, such as a capacitor, and switches 103, with anti-parallel diodes 104, arranged in a half bridge configuration as described above with respect to figure 1. The converter 200 also has at least one bypass module 202 for each converter arm , the bypass modules being operable in use to collectively provide bypass current paths between the AC terminals that bypass the DC system, i.e. to provide a path for current to flow between the AC terminals without flowing via the DC system. In the embodiment illustrated in figure 2 each cell 201 comprises a bypass module connected between its two terminals and the bypass current path is provided by providing current paths through each converter arm for current flow in both directions. In this example the bypass module comprises at least two controlled bypass switching elements, in this example thyristors 203 and 204, connected to be anti-parallel to one another. In other words there is at least one controlled bypass switching element for allowing current flow in one direction in parallel with at least one controlled bypass switching element for allowing current flow in the opposite direction.

In normal operation of the converter the thyristors of the bypass modules are gated OFF. The semiconductor switches 103 of the cells of the converter are controlled by a converter controller as will be understood by one skilled in the art. In the event that a DC fault is detected the thyristors of all the bypass modules can be gated ON by a fault controller 205 generating suitable control signals CS. This provides a bypass path which effectively short circuits the AC system as illustrated in figure 3.

Figure 3 illustrates that by gating the thyristors 203 and 204 of each bypass module to be ON, a bypass path is established for each converter arm that, in this example, allows current flow in both directions through the converter arm. This, in effect, short circuits the AC system and provides current paths that bypass the DC system. It should be noted that figure 3 illustrates just one fault current path for clarity and that in reality all conduction paths in both the upper and lower part of the converter will be involved. Again it will also be appreciated that figure 3 illustrates the fault current at a given instant and the flow path will change as the AC voltages vary.

Operating the bypass modules 202 in this way in the event of a fault thus effectively short circuits the AC system and bypasses the current from the DC system. Most, but not all, of the AC fault current will now flow around the phase limbs of the VSC. Typically however there will be a residual DC voltage across the terminals of the VSC and thus a residual DC fault current will flow in the DC system.

Referring back to figure 2, to block this residual fault current the VSC 200 has a DC breaker 206 which may also be controlled by fault controller 205. In the embodiment of figure 2 the DC breaker 206 comprises an electronic switch 207 in series a mechanical switch 208. Unlike conventional approaches using a DC breaker to block all the fault current, in embodiments of the present invention the DC breaker is only required to operate once the AC system has been effectively short circuited and only the residual DC current is flowing. The electronic switch 207 can therefore be a relatively low voltage switch. Thus the voltage rating of the DC breaker 206, and in particular of the electronic switch 207 of the DC breaker, can be substantially lower than the nominal voltage of the VSC.

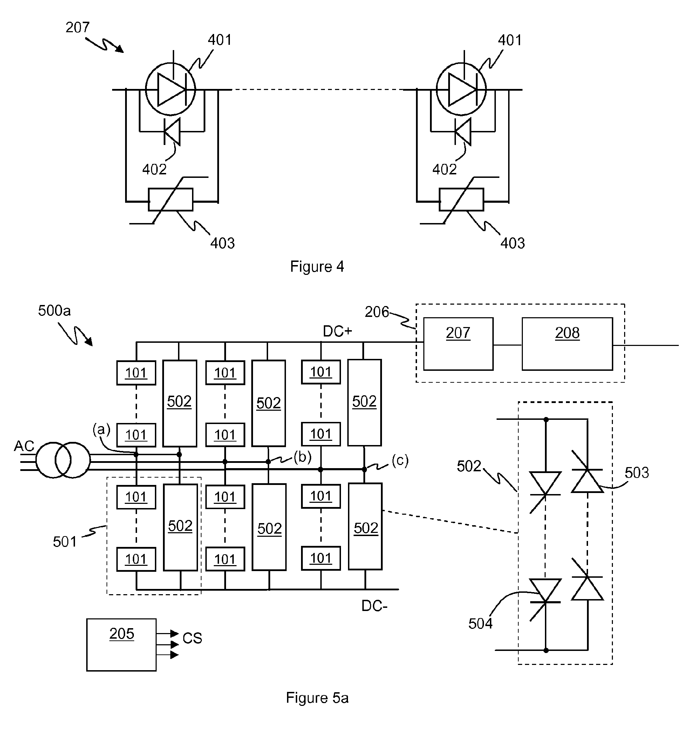

The low voltage electronic switch 207 could be realised in various ways. Figure 4 illustrates one example of a suitable low voltage switch. A plurality of electronic semiconductor switch elements 401, such as IGBTs, are connected in series, each IGBT having an associated anti-parallel diode 402. In parallel with the switch elements 401 is an energy absorbing path comprising at least one element 403 such as a surge arrestor or capacitor. In the example illustrated in figure 4 there is a surge arrestor in parallel with each switching element 401 but it will be appreciated that other arrangements are possible.

In normal operation of the converter the switch elements 401 are turned ON and the DC current flows through the electronic switch 207. In the event of a DC fault, the semiconductor switch elements 401 are turned OFF by fault controller 205. At this point the DC fault current is forced to flow via the energy absorbing path. This generates a voltage across the terminals of the low voltage electronic switch 207 which commutates the DC current out of the DC circuit and back within the converter. The time required for this commutation is determined by: the magnitude of the DC current at the opening of the semiconductor switch; the voltage developed across the semiconductor switch (and hence its rating); and the stored energy within the DC system.

In embodiments of the present invention however the electronic switch 207 is only operated when the bypass modules have been used to establish a path to bypass the converter current away from the DC system. Thus, as previously mentioned, the low voltage switch 207 need only operate to block the residual DC current due to the residual DC voltage. For a practical low voltage switch only a few series connected switch elements 401 will be required, for example of the order of tens of IGBTs, and therefore the steady state losses in normal operation will be insignificant compared with that of VSC or a full rated semiconductor DC breaker.

For example, consider a typical HVDC VSC application of say 1000MW, with DC voltage/current ratings of ±320kVdc/ 1.56kAdc and a transformer reactance of 0.10 p.u. The rating required for the low voltage switch 207 would thus be of the order of 60kV/1.56kA. Such a switch could be constructed out of thirty (30) IGBTs or similar devices of rating 4.5kV (which includes two redundant levels), giving a steady state loss under normal operation of approximately 150kW or 0.015% of the overall converter rating.

It should be noted that the low voltage electronic switch 207 could be implemented in other ways. For example it could be constructed using full or half Bridge modules, e.g. modules similar to the cells of a VSC. Again the voltage rating of the switch can be lower, and substantially lower, that the voltage rating of the VSC itself and only relatively few modules, say tens of modules, may be needed. It should be noted that just for faults within the DC system only uni-directional blocking capability is required i.e. the DC fault currents only flow in one direction.

The low voltage electronic switch 207 is used to bring the DC current down to zero or near zero. Once the DC current is at or near zero the mechanical switch 208 can be allowed to open to isolate the converter from the DC system. The mechanical switch can be any suitable type of mechanical switch as will be well understood by one skilled in the art, for instance based on a mechanical breaker of the type that may be used in an AC system. In practice the operation of the mechanical switch 208 will be relatively slow. Thus the mechanical switch may have been sent an open command by the fault controller 205 before the DC current has reached near zero. In the case of a specialised high speed mechanical switch, the switch can be timed to open at, or near to, the commutation process completion.

Thus in the event of a detection of a DC fault the fault controller 205 may send a command to the mechanical switch 208 to start the opening process and at the same time the bypass module(s) may be operated to establish the effective short circuit of the AC system, e.g. thyristors 203 and 204 are gated ON. A short time afterwards the switch elements of the low voltage electronic switch 207 may then be turned OFF to begin the commutation process, with the mechanical switch 208 then opening when the DC current is at, or near, zero.

Once the mechanical switch 208 is open and isolation is complete the bypass module(s) may be disabled by the fault controller 205, for example the thyristors 203 and 204 of the bypass module(s) may be gated OFF. The thyristors may simply be gated OFF in a stepwise fashion once isolation is complete so as to cease conduction at the next current zero. Alternatively, in some embodiments the thyristors can continue to be gated ON but phased back in a controlled manner to reduce the fault current gradually and reduce transient overvoltage effects in the AC system and converter.

It should be noted that the low voltage DC breaker 206 does not break the main fault current flowing from the AC system. This fault current eventually terminates at a current zero and therefore the energy stored in the AC system reactances (inductance) is also zero and therefore no energy has to be dissipated by the breaker and transient overvoltages will be minimised.

Embodiments of the present invention therefore have the advantages of using a DC breaker, i.e. fast operation and isolation of the VSC from the DC system. Operating the converter to effectively short circuit the AC system and bypass most of the current away from the DC system before operating the DC breaker however relaxes the requirements for the DC breaker, in particular allowing the use of a low voltage electronic switch. This requires fewer components meaning the DC breaker is smaller and less expensive and, importantly, is relatively low loss.

It will be appreciated however that the DC breaker 206 is sufficient, on its own, to block the residual DC fault current, which is all the DC current flowing at the time, and is not simply a module of a larger, higher rated DC breaker. Also, the DC breaker is not simply one path of a hybrid breaker - the electronic switch 207 is sufficient, on its own, to bring the residual DC fault current, , which is all the DC current flowing at the time, down to zero or near zero, i.e. a low enough level to operate the mechanical switch 208.

As mentioned the DC breaker connected to the first or second DC terminal is therefore not simply a module of a larger breaker connected to the same DC terminal. It will be appreciated however that in many practical implementations the DC breaker may be provided as a first breaker module connected in series with the one of the DC terminals, say DC+, and a second breaker module connected in series with the other DC terminal, DC-. Each DC breaker module is sufficient on its own to isolate the relevant DC terminal, DC+ or DC-, from the DC system, i.e. to extinguish the DC current from to/from the relevant DC terminal. Each DC breaker module may be comprise an electronic switch 207 and a mechanical switch 208 such as described above. In such an embodiment the voltage rating of the DC breaker therefore refers to the voltage rating of the overall breaker including both the first and second modules. Each individual breaker module may be rated at a voltage rating lower than the nominal voltage magnitude for that DC terminal.

It should be noted that a bypass path could be established for a VSC by the fault controller 205 gating ON the appropriate switches, e.g. IGBTs, of a cell 201. For example the switch 103 between the terminals of each cell 201 in each valve could be turned ON in the event of a DC fault to establish the effective short circuit, in which case a separate bypass module 202 would not be required. However in many practical designs the semiconductor diodes would not be capable of surviving the fault current. Thus in at least some embodiments the bypass modules 202 are included. It will be appreciated however that the VSC could be designed with switches 103 and diodes 104 sufficient to survive an expected fault current and it which case the bypass modules 202 may not be required and the fault controller 205 could instead by configured to operate in the event of a DC fault to turn ON the relevant switch 103 of each cell. As an alternative the bypass module could be used to establish a current path in one direction with the IGBTs of the converter arm being used to establish a current path in the opposite direction.

Figure 2 illustrates that each cell 201 is provided with a bypass module 202. It will be appreciated however that one bypass module may be provided for bypassing several cells, provided that the bypass modules collectively can provide the required current paths through the converter arm. Indeed in some embodiments there may be a separate bypass module in parallel with each valve as illustrated in figure 5a. Figure 5a shows a VSC 500a where each converter arm 501 comprises a first branch having a converter arm apparatus formed from a plurality of cells 101 such as described above with reference to figure 1. In parallel with each such converter arm apparatus, i.e. in a second branch between each AC terminal (a, b, c) and the relevant DC terminal (DC+, DC-), there is a bypass module 502. The bypass modules may comprise a first plurality of series connected switching elements 503 such as thyristors arranged anti-parallel with a second plurality of series connected switching elements 504 such as thyristors.

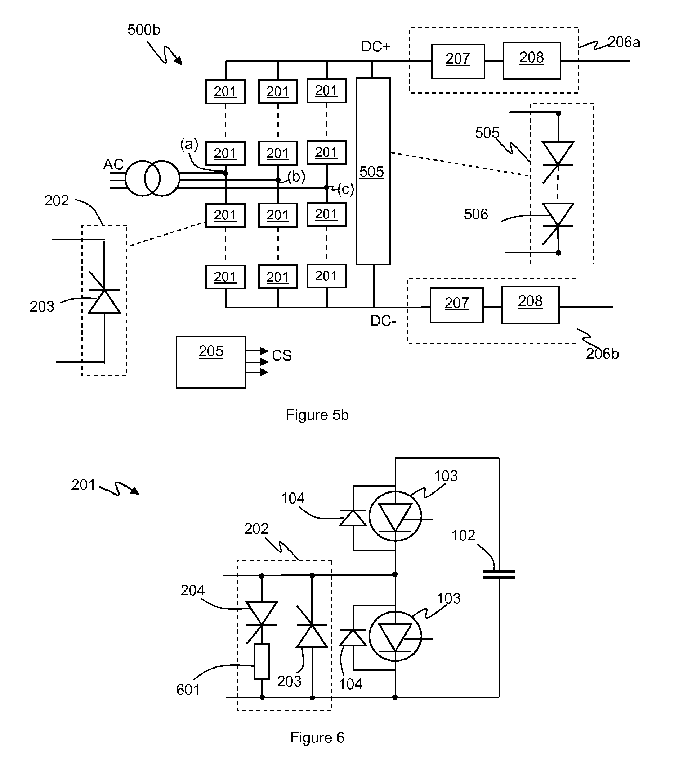

In some embodiments at least one bypass module may be connected between the DC terminals DC+ and DC- as illustrated in figure 5b. Figure 5b shows a VSC 500b where each converter arm comprises a converter arm apparatus formed from a plurality of cells 201 such as described above with reference to figure 2, each cell comprising a bypass module. In the embodiment of figure 5b however the bypass module 202 associated with cell comprise switching elements 203 for establishing a bypass path for current flow in one direction only through the converter arm. An additional bypass module 505 is connected between the DC terminals DC+, DC-. The additional bypass module 505 in this example comprises a plurality of series connected switching elements 506 such as thyristors for current flow in the opposite direction to the flow through the bypass modules of the converter arms. In the event of a DC fault the switching elements 506 of the bypass module 505 may be gated ON to provide a current path between the DC terminals that bypasses the DC system. The switching elements 203 of each cell bypass module 202 may also be turned ON. This completes a bypass current path between the AC terminals, with the additional bypass module 505 being shared between the phase limbs.

In some embodiments however the converter arm bypass modules are not needed and the converter arms may comprise cells such as described with respect to figure 1, e.g. cells 101. It will be clear that in such embodiments the current does flow through the converter arms through the normal switching elements of the cells 101.

Figure 5b also shows the DC breaker comprises first breaker module 206a and second breaker module 206b.

It should be noted that operating the bypass modules 202 or 502 in the event of the fault will result in a higher AC fault current component than would otherwise have occurred. This increase is due to the offset (dc) component together with little resistance in the AC current path through the converter. In some instances this could mean that the AC current does not reach zero in one or more valves of the converter. Consequently, if thyristors are used as the switching elements of the bypass modules, this may lead to a failure to extinguish the AC fault current after the thyristors are gated OFF. In some embodiments therefore a current limiting element such as a resistor may be connected in series with at least one of the bypass module switching elements as illustrated in figure 6. Figure 6 illustrates a cell 201 of the VSC where similar components to those illustrated in figure 2 are given the same reference numerals. In the example illustrated in figure 6 at least one resistor 601 is connected in series with at least one of the thyristors 203 and 204. The resistor 601 limits the peak AC fault current and forces a current zero in the AC waveform, thus ensuring that once mechanical isolation has been established the AC fault current can be extinguished. It will be appreciated that the presence of resistor 601 will have the effect of reducing the effectiveness of the commutation voltage across the electronic switch 207. The can be mitigated by using a low voltage switch with a slightly higher voltage rating or by allowing a greater time for the DC current to be stopped.

Additionally or alternatively the fault controller 205 may be configured to control the timing of the turn ON of the thyristors with regard to the AC waveform to limit the fault current to an acceptable level.

It will be appreciated by one skilled in the art that sub-modules or cells of an MMC type converter may conventionally be provided with a bypass path for use in event of a fault with that particular module. Such a bypass path may be enabled if a fault is detected with that particular cell to effectively removed the cell from the converter arm. Such fault handling for an individual cell or sub-module is quite different to the DC fault blocking of embodiments of the present invention. In fault handling for an individual module just the bypass path from that cell or sub-module is operated, which may provided by a mechanical switch. The remaining sub-modules or cells are not bypassed and continued to be switched in normal operation. By contrast in a DC fault situation in embodiments of the present invention all the bypass modules are controlled to provide the bypass current paths.

To illustrate the advantages of the present invention the operation of a VSC was simulated. To simplify the simulation the VSC was modelled as a six-pulse diode bridge operating at a rated current of 1.56kA in normal steady state operation. A DC reactance of 100mH was included to represent a DC cable and/or DC reactor and was chosen to give an initial rate of rise of current of 5A/ps.

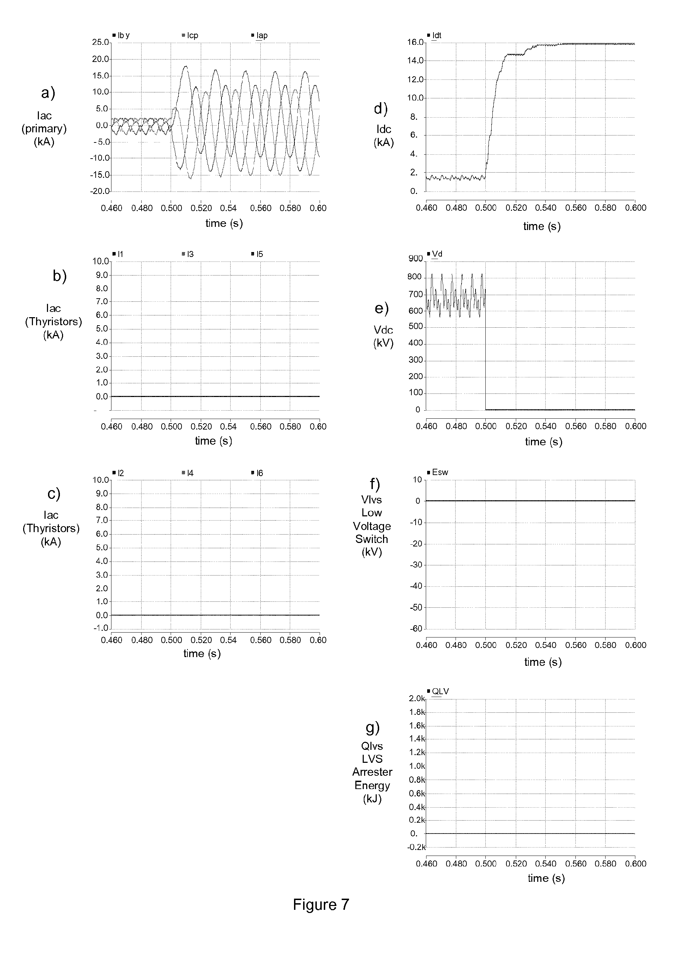

Figure 7 - 9 illustrates the waveforms in the simulated model in the event of a DC fault. These figures shows: (a) the AC primary current for the three AC phases, (b) the thyristor currents for the bypass modules of the high side vales, (c) the thyristor currents for the bypass modules of the low side vales; (d) the DC terminal current, (e) the DC voltage, (f) the voltage across the low voltage electrical switch and (g) the low voltage switch arrestor energy. Normal operation is simulated until time 0.50 at which point faulted operation occurs.

Figure 7 illustrates the waveforms for the basic circuit without any protective action. It can be seen that once the fault develops the amplitude of AC primary current (plot a) rises rapidly. The peak AC primary current is approximately 18kA. Likewise the DC current rises rapidly (plot d) and the peak DC Current is approximately 16kA which is reached within 40ms.

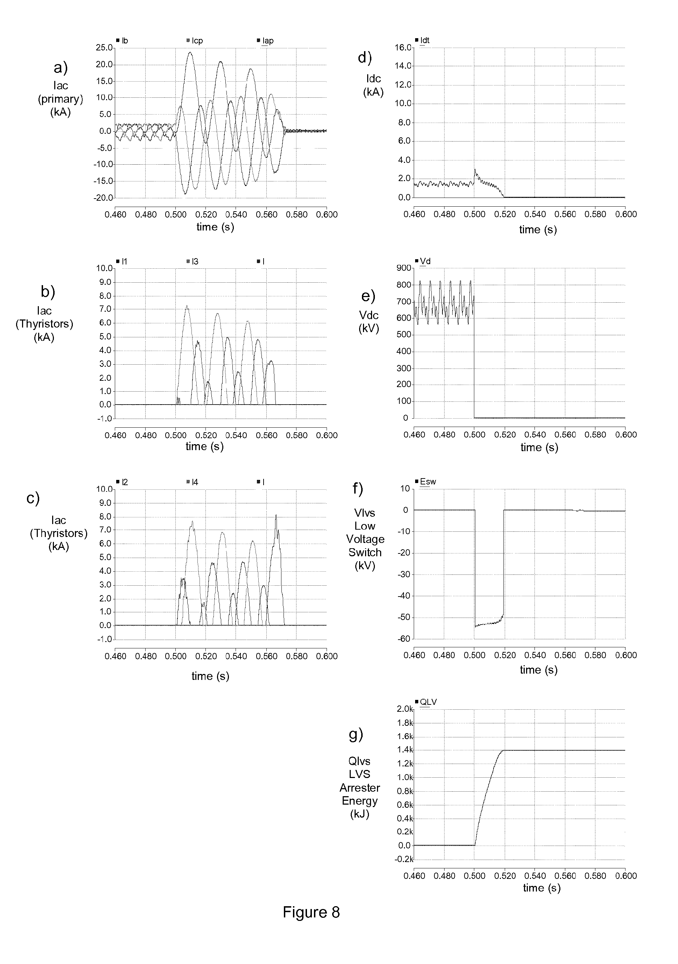

Figure 8 shows the response with the proposed protective action with a 3-cycle mechanical breaker for isolation of the faulted DC system. The protection sequence was set to operate as the DC current exceeded 3kA. The choice of components gave a current extinction 20 ms later. It can be seen (plot d) that the DC current starts to rise, then, as the limit is reached the bypass path is enabled and the low voltage electrical switch is turned off. This leads to currents flowing via the thyristors of the bypass modules of the vales (plots b and c). The activation of the bypass modules leads to a larger peak AC primary current (plot a). The peak AC primary current is now 23.5kA. The peak thyristor current is 8.1 kA. The low voltage switch experienced a maximum voltage excursion of 54kV and the arrester dissipated approximately 1.4MJ.

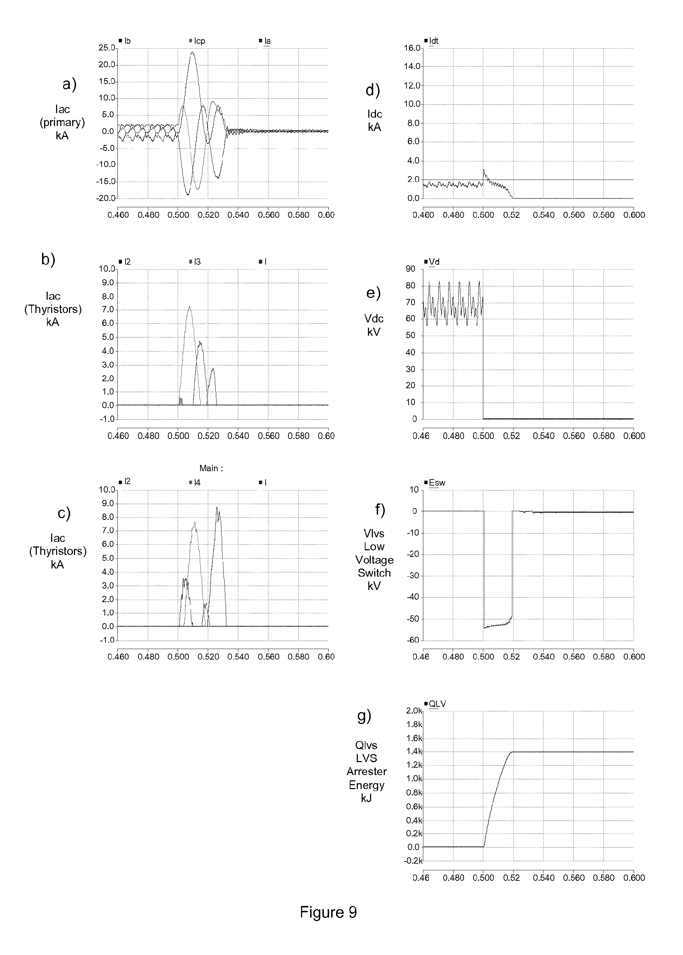

Figure 9 shows the response with the proposed protective action with a fast disconnect (<1 ms). The AC primary (plot a) and thyristor peak currents (plots b and c) were broadly the same although the duration was much less, with only one thyristor experiencing a second fault current loop. The low voltage switch voltage and arrester energy dissipations were unchanged.

It can therefore be seen that embodiments of the present invention provide a low-loss fault blocking converter which provided rapid blocking of DC faults and avoids the need to operate an AC breaker in a DC fault condition.

It should be noted that the above-mentioned embodiments illustrate rather than limit the invention, and that those skilled in the art will be able to design many alternative embodiments without departing from the scope of the appended claims. The word "comprising" does not exclude the presence of elements or steps other than those listed in a claim, "a" or "an" does not exclude a plurality, and a single feature or other unit may fulfil the functions of several units recited in the claims. Any reference signs in the claims shall not be construed so as to limit their scope.

## Claims

1. A voltage source converter apparatus comprising:
a plurality of AC terminals and first and second DC terminals;
each AC terminal being connected to the first DC terminal via a respective first converter arm and to the second DC terminal via a respective second converter arm;
a DC breaker connected in series with at least one of the first and second DC terminals; and
a fault controller, wherein said fault controller is configured to, in the event of a DC fault being detected:
control the converter apparatus to provide current paths for current flow between the AC terminals that bypass a DC system connected to the first and second DC terminals; and
operate the DC breaker.

2. A voltage source converter apparatus as claimed in claim 1 wherein the converter comprises at least one bypass module for establishing at least one of said current paths, said at least one bypass module comprising at least one controlled bypass switching element.

3. A voltage source converter apparatus as claimed in claim 2 wherein each bypass module comprises at least one controlled bypass switching element for allowing current flow in one direction in parallel with at least one controlled bypass switching element for allowing current flow in the opposite direction.

4. A voltage source converter apparatus as claimed in claim 2 or claim 3 wherein at least one of said controlled bypass switching elements is connected in series with a current limiting element.

5. A voltage source converter apparatus as claimed in any of claims 2 to 4 wherein said controlled bypass switching elements comprise thyristors.

6. A voltage source converter apparatus as claimed in any of claims 2 to 5 wherein each converter arm comprises a plurality of cells connected in series and wherein each cell comprises one of said bypass modules connected between the terminals of the cell.

7. A voltage source converter apparatus as claimed in any of claims 2 to 5 wherein each converter arm comprises at least one bypass module connected in parallel with a converter arm apparatus for operation of the converter in a non-fault mode of operation.

8. A voltage source converter apparatus as claimed in any of claims 2 to 7 wherein at least one bypass module is connected in series between the first and second DC terminals.

9. A voltage source converter apparatus as claimed in any preceding claim wherein the DC breaker has a voltage rating which is lower than the nominal DC voltage of the voltage source converter.

10. A voltage source converter apparatus as claimed in any preceding claim wherein the DC breaker comprises a first breaker module connected in series with the first DC terminal and a second breaker module connected in series with the second DC terminal.

11. A voltage source converter apparatus as claimed in any preceding claim wherein the DC breaker comprises an electronic switch in series with a mechanical switch.

12. A voltage source converter apparatus as claimed in claim 11 wherein said electronic switch comprises a plurality of breaker semiconductor switches connected in series and at least one energy absorbing element configured to form an energy absorbing path in parallel with a path through said plurality of breaker semiconductor switches.

13. A voltage source converter apparatus as claimed in claim 12 wherein said electronic switch comprises no more than 50 semiconductor switches.

14. A voltage source converter apparatus as claimed in any of claims 11 to 13 wherein the DC breaker and fault controller are configured such that, on detection of a DC fault the fault controller is operable to extinguish the DC fault current in no more than 50ms.

15. A method of fault current limiting in a voltage source converter having a plurality of AC terminals and first and second DC terminals; each AC terminal being connected to the first DC terminal via a respective first converter arm and to the second DC terminal via a respective second converter arm; the method comprising:
in the event of a DC fault being detected, controlling the converter to provide current paths for current flow between the AC terminals that bypass a DC system connected to the first and second DC terminals; and
operating a DC breaker connected in series with at least one of the first and second DC terminals.
